(19) Europäisches Patentamt / European Patent Office / Office européen des brevets

(11) **EP 3 194 662 B1**

(12) **FASCICULE DE BREVET EUROPEEN**

(45) Date de publication et mention de la délivrance du brevet:
**31.08.2022 Bulletin 2022/35**

(21) Numéro de dépôt: **15748293.6**

(22) Date de dépôt: **15.07.2015**

(51) Classification Internationale des Brevets (IPC):
**E02D 3/12** *(2006.01)* **E02D 17/13** *(2006.01)*

(52) Classification Coopérative des Brevets (CPC):
**E02D 3/126; E02D 17/13;** E02D 2250/003; E02D 2300/0018

(86) Numéro de dépôt international:
**PCT/FR2015/051937**

(87) Numéro de publication internationale:
**WO 2016/009143 (21.01.2016 Gazette 2016/03)**

(54) **PROCÉDÉ DE FABRICATION D'UN ÉLÉMENT DANS UN SOL PAR MÉLANGE IN SITU DU SOL EN PLACE AVEC UN GEOPOLYMERE**

VERFAHREN ZUR HERSTELLUNG EINES ELEMENTS IM BODEN DURCH IN-SITU-BODENMISCHUNG MIT EINEM GEOPOLYMER

METHOD FOR MANUFACTURING AN ELEMENT IN THE GROUND BY IN-SITU SOIL MIXING WITH A GEOPOLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2014 FR 1456978**

(43) Date de publication de la demande:
**26.07.2017 Bulletin 2017/30**

(73) Titulaire: **Soletanche Freyssinet**
**92500 Rueil Malmaison (FR)**

(72) Inventeurs:
• **DARSON BALLEUR, Sabine**
**F-92500 Rueil-malmaison (FR)**
• **MATHIEU, Fabrice**
**F-92500 Rueil-malmaison (FR)**

(74) Mandataire: **Cabinet Beau de Loménie**
**158, rue de l'Université**
**75340 Paris Cedex 07 (FR)**

(56) Documents cités:
WO-A2-2011/020975 FR-A1- 2 899 608
US-A- 5 814 147

# Description

## Arrière-plan de l'invention

La présente invention porte sur le domaine technique de la fabrication in situ d'éléments constitués par mélange du sol en place avec un matériau d'apport. Une telle technique est communément appelée « procédé de mélange de sol profond », en anglais « deep soil mixing ».

L'invention porte plus particulièrement sur un procédé de fabrication d'un élément dans un sol par une technique de mélange de sol profond.

Dans ce procédé, le matériau d'apport est le plus souvent un liant hydraulique contenant généralement du ciment de type Portland. Par mélange avec le sol, on obtient un matériau offrant des propriétés mécaniques spécifiques.

Cette technique comporte toutefois plusieurs inconvénients.

En premier lieu, le matériau obtenu présente une mauvaise durabilité : il tend en effet à se dégrader suite à une exposition prolongée à l'air et aux conditions climatiques extérieures, ou bien suite à une exposition prolongée à certains polluants du sol. Par exemple, lorsqu'un sol pollué par la présence de sulfates est utilisé pour fabriquer l'élément, on peut constater l'apparition de phénomènes de gonflement.

Ensuite, ce type de liant hydraulique contenant du ciment Portland est connu pour présenter une mauvaise empreinte carbone. Le document US5814147A décrit un procédé de fabrication d'un élément dans un sol, comportant: une étape de forage d'une excavation dans le sol et une étape de mélange in situ du sol en place de l'excavation afin de former in situ un géopolymère. Dans ce procédé, une première composition est injectée lors de la phase de descente et une seconde composition est injectée lors de la phase de remontée.

## Objet et résumé de l'invention

Un but de la présente invention est de remédier aux inconvénients précités en proposant un procédé permettant de fabriquer, à l'aide d'une technique de mélange de sol profond, un élément dans un sol ayant une meilleure durabilité et une meilleure empreinte carbone que ceux de l'art antérieur.

Pour ce faire, l'invention propose deux procédés de fabrication d'un élément dans un sol suivant les revendications indépendantes 1 et 3.

La géométrie de l'excavation dépend de l'outil de forage utilisé. Il peut s'agir d'une tranchée ou d'un forage longiligne, selon la forme de l'élément à fabriquer.

On comprend donc que le sol de l'excavation est déstructuré lors de l'étape de forage, et est mélangé avec le géopolymère pour former le matériau constitutif de l'élément. Après durcissement du matériau, on obtient l'élément.

Le géopolymère, également appelé ciment géopolymère, résulte généralement du mélange d'un minéral silico - alumineux avec un réactif alcalin.

Le ciment géopolymère est connu pour présenter une empreinte carbone très inférieure à celui du ciment Portland. En outre, il est peu corrosif. A ce titre, WO 2011/020975 fournit un exemple d'un ciment géopolymèrique non corrosif.

Aussi, l'élément obtenu après durcissement du matériau résultant du mélange du sol en place avec le géopolymère présente une meilleure résistance aux agressions chimiques du sol, ce qui lui confère une plus grande durabilité.

Le procédé selon l'invention permet ainsi de fabriquer notamment des parois, écrans ou colonnes dans le sol présentant une meilleure durabilité, ce qui présente un grand intérêt dès lors que les ouvrages de soutènement sont généralement prévus pour durer longtemps.

Le procédé objet de l'invention trouvera donc son application, notamment :

dans la construction d'éléments sous forme d'inclusions de sol unitaires de section quelconque (rectangulaire, circulaire, carrée, ou autre), en présence ou pas de nappe phréatique ;
dans la construction d'éléments sous forme d'inclusions de sol de forme linéique, sous forme d'un écran continu, ou sous forme d'une succession d'éléments unitaires adjacents les uns aux autres ;
dans la construction d'écrans de faible perméabilité ;
dans la construction d'écrans de soutènement provisoires ou permanents. Dans une variante, le procédé comporte en outre une étape d'insertion dans l'excavation d'un organe de rigidification, tel que par exemple une cage d'armature, avant la prise du géopolymère.

Le procédé comporte une étape d'injection dans l'excavation d'une composition contenant un géopolymère, de sorte que, lors de l'étape de mélange, la composition est mélangée in situ avec le sol.

Ainsi la composition contenant le géopolymère est injectée dans l'excavation pour être mélangée in situ avec le sol excavé.

Le géopolymère est préférentiellement préparé en surface, par exemple sous forme de coulis ou de mortier, préalablement à son injection dans l'excavation, au voisinage de l'outil de forage et mélangeage.

Le procédé prévoit aussi qu' on injecte dans l'excavation une base alcaline afin de former in situ le géopolymère par réaction de la base alcaline avec le sol en place.

La base alcaline réagit alors avec le minéral silico - alumineux présent naturellement dans le sol. On comprend donc que le géopolymère est synthétisé in situ dans l'excavation, pendant le mélange avec le sol en place.

Selon l'invention, on fournit un outil de forage et de mélangeage, et le procédé comporte une phase de descente de l'outil de forage et de mélangeage suivie d'une phase de remontée de l'outil de forage et de mélangeage, le procédé comportant une étape d'injection d'une première composition lors de la phase de descente, et une étape d'injection d'une seconde composition lors de la phase de remontée, l'étape de forage ayant lieu pendant la phase de descente, l'étape de mélange comportant une première phase de mélange in situ du sol en place avec la première composition lors de la phase de descente, suivi d'une seconde phase de mélange in situ de la seconde composition avec le sol en place préalablement mélangé avec la première composition, la seconde phase de mélange ayant lieu lors de la phase de remontée, le géopolymère étant formé in situ par réaction de la première composition avec la seconde composition.

Ainsi, le géopolymère est formé pendant la phase de remontée de l'outil de forage et mélangeage, tout en étant mélangé avec le sol excavé, afin de former le matériau constitutif de l'élément.

L'invention présente plusieurs avantages. Tout d'abord, il permet avantageusement de maitriser la prise du géopolymère. On comprend en effet que le procédé permet d'activer de manière différée le durcissement du matériau constitué par le mélange de géopolymère et du sol excavé, le durcissement ayant lieu après la phase de descente, de préférence après la phase de remontée.

Il permet ainsi d'éviter la prise du géopolymère pendant la phase de descente, ce qui risquerait de rendre difficile la remontée de l'outil, notamment dans le cas de forage à grande profondeur.

Un autre avantage est qu'il permet également de fabriquer l'élément en deux temps, la phase de remontée pouvant avoir lieu plusieurs heures ou jours après la phase de descente.

Selon l'invention, la première composition contient un minéral silico - alumineux tandis que la seconde composition contient une base alcaline, ou bien la première composition contient une base alcaline tandis que la seconde composition contient un minéral silico - alumineux.

De préférence, la première composition, injectée lors de première étape de mélange, est un liquide comprenant des particules de silice alumineuse, tandis que la seconde composition, injectée lors de la seconde étape de mélange, est du silicate alcalin sous forme liquide.

Selon une variante, les première et seconde compositions, sous forme liquide, sont injectées sous haute pression, par exemple à une pression supérieure à 5 MPa.

La première et/ou seconde composition peut également être injectée dans le sol sous forme pulvérulente. Dans ce cas, on injecte si nécessaire de l'eau.

Pour la mise en œuvre, on pourra utiliser par exemple les outils de forage et mélange décrits dans les documents WO 2007/116178 et EP 1 878 833, ou tout autre outil de forage et mélangeage.

Selon aussi l'invention, préalablement à l'étape de forage, on forme une prétranchée dans le sol, on remplit cette prétranchée d'une première composition, procédé dans lequel on réalise ensuite une étape d'injection d'une seconde composition dans l'excavation pendant l'étape de forage, et dans lequel :

l'étape de forage consiste à forer une tranchée au droit de la prétranchée contenant la première composition afin d'entrainer la première composition dans l'excavation, et
l'étape de mélange consiste à mélanger le sol en place avec les première et deuxième compositions, le géopolymère étant formé in situ par réaction de la première composition avec la seconde composition.

Ainsi, lors de l'étape de forage, la première composition contenue dans la prétranchée est amenée dans l'excavation pour y être mélangée, au cours de l'étape de mélange, avec le sol en place et avec les première et deuxième compositions, et ce afin de former le matériau constitutif de l'élément, à savoir un matériau résultant du mélange du sol en place avec un géopolymère obtenu par réaction des première et deuxième compositions.

Selon ce mode de réalisation de l'invention, la première composition contient un minéral silico - alumineux tandis que la seconde composition contient une base alcaline, ou bien, selon une variante, la première composition contient une base alcaline tandis que la seconde composition contient un minéral silico - alumineux.

De préférence, la première composition, qui est répandue dans la prétranchée, est un minéral silico-alumineux, tandis que la seconde composition est une solution liquide de silicate alcalin.

Pour la mise en œuvre de ce quatrième mode, on pourra avantageusement utiliser un outil de forage et mélangeage continu, de type trancheuse, muni d'une lame verticale. La seconde composition est préférentiellement injectée dans l'excavation via des buses disposées le long de la lame.

L'invention concerne enfin un élément dans un sol obtenu par la mise en œuvre du procédé selon l'une quelconque des revendications 1 à 3 ci-dessous.

De préférence, mais non exclusivement, ledit élément est un élément de soutènement.

Brève description des dessins

L'invention sera mieux comprise à la lecture de la description détaillée faite ci-après, à titre indicatif mais non limitatif, en référence aux dessins annexés, sur lesquels :

- les figures **1A à 1D** illustrent un premier mode de mise en œuvre de l'invention ;
- les figures **2A à 2C** illustrent un deuxième mode de mise en œuvre de l'invention ;

- les figures **3A** à **3C** illustrent un troisième mode de mis en œuvre de l'invention ; et
- les figures **4A à 4C** illustrent un quatrième mode de mise en œuvre de l'invention.

Description détaillée de l'invention

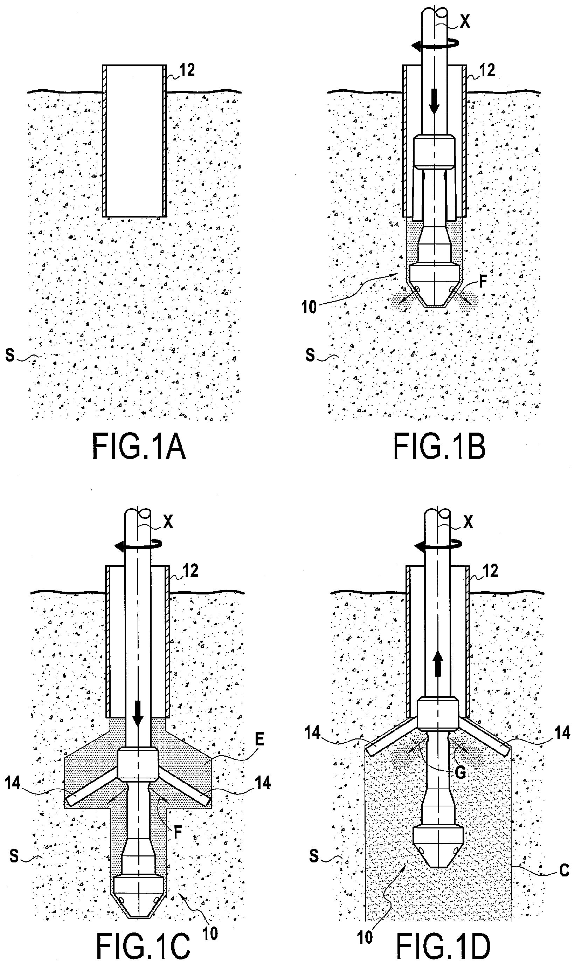

A l'aide des figures **1A** à **4C,** on va décrire successivement, à titre non limitatif, quatre modes de mise en œuvre du procédé objet de la présente invention.

Le premier mode de mise en œuvre va être décrit à l'aide des figures **1A** à **1D.**

Dans cet exemple, le premier mode de mise en œuvre utilise l'outil de forage et mélangeage décrit dans le document EP 1 878 833.

Bien entendu, d'autres outils de forage et mélange peuvent être utilisés dans le cadre de ce premier mode de mise en œuvre, tel que par exemple, l'outil décrit en WO 2007/116178, ou bien encore les tarières verticales simples ou doubles.

Dans cet exemple, on fabrique un élément dans le sol **S** se présentant sous la forme d'une colonne **C.** Pour ce faire, on réalise tout d'abord une étape de forage d'une excavation **E** dans le sol **S,** en introduisant dans le sol **S** un outil de forage et mélangeage **10** rotatif autour d'un axe vertical **X.** Comme on le constate sur les figures **1A** à **1D,** l'outil de forage et de mélangeage **10** traverse une portion tubulaire **12** préalablement introduite dans le sol **S** à forer. Cette étape d'insertion préalable de la portion tubulaire **12** est toutefois facultative.

L'opération de forage est réalisée ici en mettant l'outil **10** en rotation tout en injectant un fluide de forage **F.**

Comme on le constate sur la figure **1C,** après que l'outil de forage et de mélangeage **10** a franchi la portion tubulaire **12,** deux ailes **14** se déploient radialement afin d'augmenter le diamètre de l'excavation.

Après que l'outil de forage et de mélangeage **10** a atteint la profondeur de forage désirée, l'outil est remonté. Pendant cette phase de remontée, l'outil de forage et de mélangeage **10** continue à tourner autour de l'axe de rotation vertical **X,** et on injecte dans l'excavation une composition **G** contenant un géopolymère, de sorte que, lors de la phase de remontée, on réalise une étape de mélange dans laquelle la composition **G** contenant le géopolymère est mélangée in situ avec le sol excavé.

Dans cet exemple, la composition **G** est un gel amorphe de silice obtenu par l'action d'un silicate alcalin (soude potasse ou autre) sur un minéral silico alumineux (par exemple des cendres, un laitier, un métakaolin). La colonne **C** constituée du mélange de sol excavé avec le géopolymère **G** présente une faible porosité et une bonne tenue aux agressions chimiques.

Il a également été constaté que la formation du gel est nettement plus rapide que le processus d'hydratation du ciment. Enfin, une fois le gel formé par précipitation et mélangé au sol excavé, il n'y a plus d'évolution de résistance en fonction du temps.

On comprend donc que ce gel **G** est préparé en surface et est injecté dans l'excavation lors de la phase de remontée de l'outil de forage et de mélangeage **10,** tout en étant mélangé in situ avec le sol.

Après durcissement, on obtient une colonne constituée d'un matériau présentant une meilleure durabilité que les colonnes réalisées à l'aide d'un liant hydraulique constitué d'un mélange bentonite/ciment.

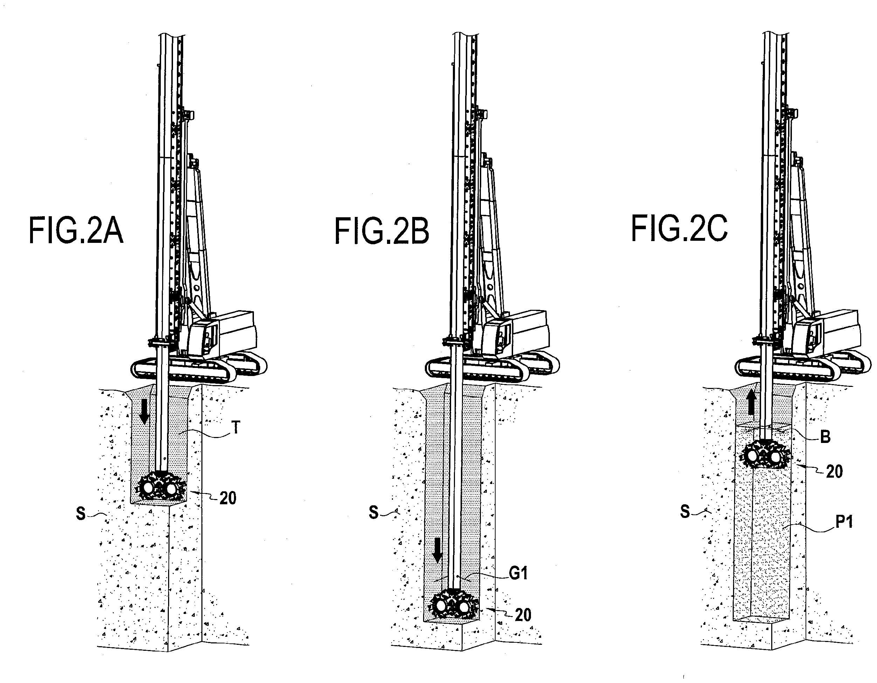

A l'aide des figures **2A** à **2C,** on va décrire maintenant un deuxième mode de mise en œuvre du procédé selon l'invention. Dans cet exemple, on utilise un outil de forage et mélangeage **20** comprenant deux tambours de forage et de mélangeage qui sont rotatifs autour d'axes horizontaux. On se référera au document WO 2007/116178 pour une description plus détaillée de cet outil.

Dans ce mode de mise en œuvre, tel que décrit en figure **2A,** on réalise une étape de forage d'une excavation sous forme de tranchée T dans le sol S en descendant l'outil **20** précité. Une fois que ce dernier a atteint la profondeur de forage désiré, il est remonté. Pendant cette phase de remontée, on injecte dans la tranchée une base alcaline **B** tout en continuant de faire tourner les tambours de forage et de mélangeage afin de former in situ dans la tranchée le géopolymère par réaction de la base alcaline avec le minéral silico - alumineux contenu dans le sol en place. Comme base alcaline on pourra utiliser par exemple du silicate de potassium, ou du silicate de soude.

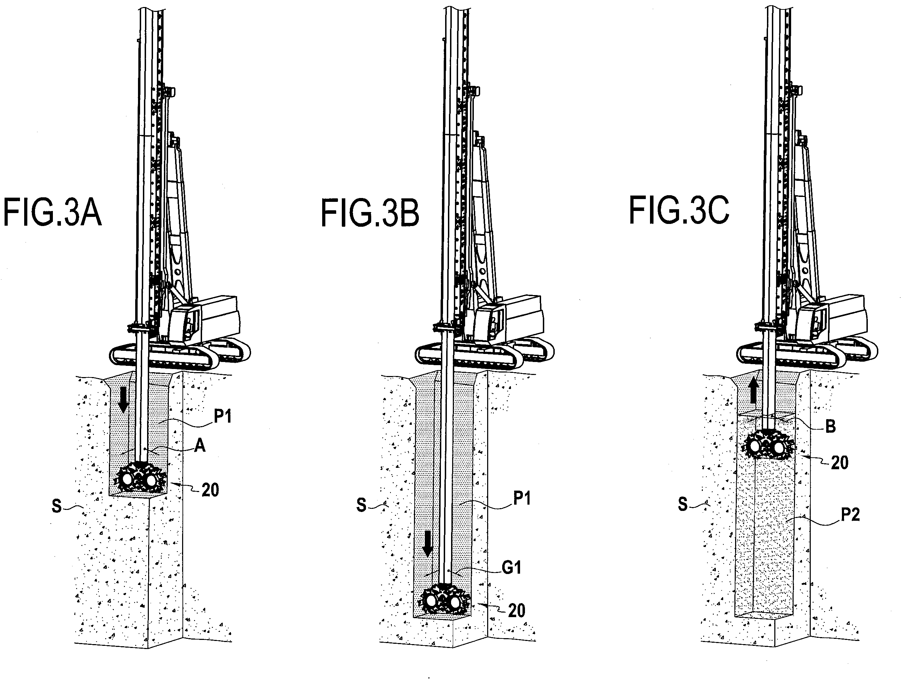

A l'aide des figures **3A** à **3C,** on va maintenir décrire un troisième mode de mise en œuvre du procédé objet de l'invention.

Selon ce mode de mise en œuvre, on fournit un outil de forage et de mélangeage **20,** similaire à celui illustré aux figures **2A** à **2C.**

On réalise une étape de forage qui a lieu lors d'une phase de descente de l'outil de forage et de mélangeage, illustré en figure **3A.**

Selon l'invention, on réalise une étape d'injection d'une première composition **A** lors de la phase de descente tout en réalisant une première phase de mélange in situ du sol en place avec la première composition **A.**

Ainsi, lors de la phase de descente, on fore la tranchée **T** tout en mélangeant in situ le sol en place avec la première composition **A.**

Après que l'outil de forage et mélangeage **20** a atteint la profondeur désirée, illustrée en figure **3B,** on remonte l'outil de forage et mélangeage.

Lors de cette phase de remontée, on injecte une seconde composition **B** dans le sol et on réalise une seconde phase de mélange in situ de la seconde composition **B** avec le sol en place préalablement mélangé avec la première composition **A.** La seconde phase de mélange a donc lieu lors de la phase de remontée de l'outil de forage et de mélangeage.

Le géopolymère **G** est formé in situ par réaction de la première composition **A** avec la seconde composition **B** selon :

$$A + B \rightarrow G$$

Dans cet exemple, la première composition **A** injectée lors de la descente comprenant 700 kg de cendres volantes. On injecte également un liquide sous la forme d'un mélange eau et bentonite (20 à 30 kg).

Pendant la phase de remontée, on malaxe le mélange sol/première composition **A** préalablement réalisé pendant la phase de descente, et on injecte la seconde composition **B** sous la forme d'un mélange d'eau, de soude et de silicate (par exemple 300 l d'eau, 115 kg de soude et 310 kg de silicate).

Après durcissement du matériau résultant du mélange de sol excavé et de géopolymère **G,** on obtient une paroi moulée **P2** dans le sol **S.**

Comme on l'a compris, ce troisième mode de mise en oeuvre peut alternativement être réalisé à l'aide de l'outil illustré aux figures **1A** à **1D.**

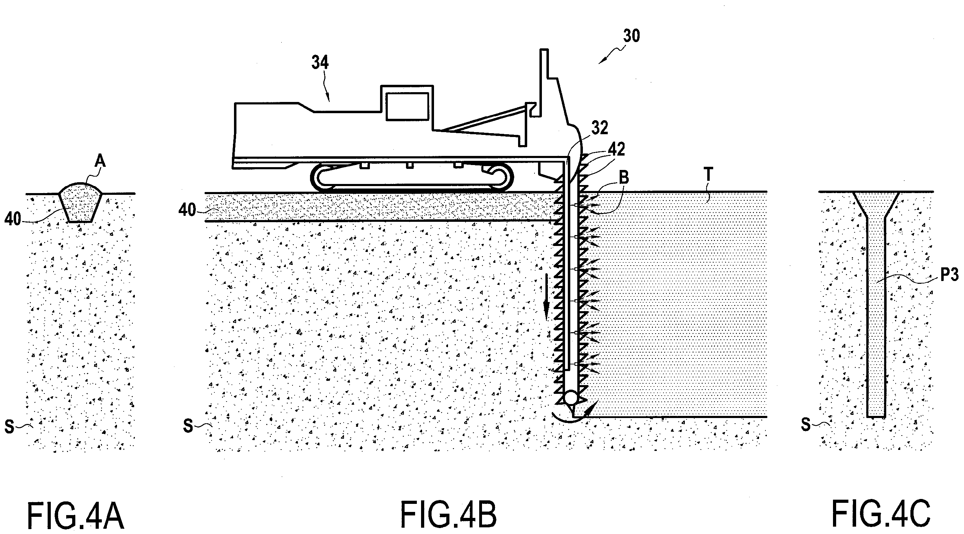

A l'aide des figures **4A** à **4C,** on va maintenant décrire un quatrième mode de mise en œuvre du procédé objet de l'invention.

On fournit un outil de forage et de mélangeage **30,** à savoir une trancheuse qui comporte une lame **32** s'étendant verticalement ; cette lame **32** est reliée à un porteur **34.** Le déplacement du porteur **34** permet de fabriquer une excavation sous forme d'une tranchée continue **T.** Un tel outil de forage et de mélangeage **30** est bien connu par ailleurs et ne sera pas décrit plus en détail ici.

Selon le procédé, on forme tout d'abord une prétranchée **40** dans le sol **S** que l'on remplit d'une première composition **A.** Dans cet exemple, il s'agit d'un minéral silico-alumineux. La profondeur de cette prétranchée est de l'ordre de 20 centimètres à 1 mètre.

On réalise ensuite une étape de forage qui consiste à forer une tranchée **T** au droit de la prétranchée **40** qui contient la première composition **A,** et ce afin d'entrainer la première composition **A** dans l'excavation. Concomitamment à l'étape de forage, on injecte dans la tranchée une seconde composition **B,** et on mélange in situ le sol en place avec les première et deuxième compositions **A, B,** afin de former le matériau constitutif de l'élément à fabriquer, à savoir une paroi continue **P3.**

Dans cet exemple, la deuxième composition est une solution de silicate alcalin liquide qui est pompée dans la tranchée au travers de buses **42** disposées le long de la lame **32.** La réaction des première et deuxième compositions **A,B** forme in situ un géopolymère qui se retrouve simultanément mélangé avec le sol en place. Après durcissement, on obtient la paroi continue **P3.**

**Revendications**

**1.** Procédé de fabrication d'un élément (C, P1, P2, P3) dans un sol (S) pour améliorer les propriétés mécanique dudit sol, le procédé comportant :

la fourniture d'un outil de forage et de mélangeage (20) ;
une étape de forage d'une excavation (E/T) dans le sol (S) comportant une phase de descente de l'outil de forage et de mélangeage suivie d'une phase de remontée de l'outil de forage et de mélangeage;
ledit procédé comportant:

une étape d'injection d'une première composition (A) lors de la phase de descente ;
une étape d'injection d'une seconde composition (B) lors de la phase de remontée, la première ou la seconde composition contenant une base alcaline, la première composition (A) contenant un minéral silico-alumineux lorsque la seconde composition contient la base alcaline, et lorsque la première composition (B) contient la base alcaline, la seconde composition contient un minéral silico-alumineux ; et
une étape de mélange in situ, dans l'excavation, comportant une première phase de mélange in situ du sol en place avec la première composition (A) lors de la phase de descente, suivi d'une seconde phase de mélange in situ de la seconde composition (B) avec le sol en place préalablement mélangé avec la première composition (A), la seconde phase de mélange ayant lieu lors de la phase de remontée, un géopolymère (G) étant formé in situ par réaction de la première composition (A) avec la seconde composition (B).

**2.** Procédé selon la revendication 1, dans lequel la base alcaline contient une solution de silicate alcalin.

**3.** Procédé de fabrication d'un élément (C, P1, P2, P3) dans un sol (S), pour améliorer les propriétés mécanique dudit sol, comprenant une étape selon laquelle on forme une prétranchée (40) dans le sol (S) et on remplit cette prétranchée d'une première composition (g1), on réalise ensuite: une étape de forage d'une excavation (E/T) dans le sol (S) pendant laquelle on injecte une seconde composition dans l'excavation, l'étape de forage consistant à forer l'excavation sous forme de tranchée au droit de la prétranchée contenant la première composition (g1) afin d'entrainer la première composition dans l'excavation; et une étape de mélange in situ, dans l'excavation, du sol en place de l'excavation avec les première et deuxième compositions afin de former in situ un géopolymère (G), le géopolymère étant formé in situ par réaction de la première composition avec la seconde composition, la première ou la seconde composition contenant une base alcaline, la première composition contenant un minéral silico-alumineux lorsque la seconde composition contient la base alcaline, et lorsque la première composition contient la base alcaline, la seconde composition contient un minéral silico-alumineux.

**Patentansprüche**

1. Verfahren zur Herstellung eines Elements (C, P1, P2, P3) in einem Boden (S) zum Verbessern der mechanischen Eigenschaften des Bodens, wobei das Verfahren umfasst:

die Bereitstellung eines Bohr- und Mischwerkzeugs (20),
einen Schritt des Bohrens einer Ausschachtung (E/T) in dem Boden (S), der eine Phase des Absenkens des Bohr- und Mischwerkzeugs, gefolgt von einer Phase des Anhebens des Bohr- und Mischwerkzeugs umfasst,
wobei das Verfahren umfasst:

einen Schritt des Einspritzens einer ersten Zusammensetzung (A) während der Phase des Absenkens,
einen Schritt des Einspritzens einer zweiten Zusammensetzung (B) während der Phase des Anhebens, wobei die erste oder die zweite Zusammensetzung eine Alkalibase enthält, die erste Zusammensetzung (A) ein Aluminiumsilikatmineral enthält, wenn die zweite Zusammensetzung die Alkalibase enthält, und, wenn die erste Zusammensetzung (B) die Alkalibase enthält, die zweite Zusammensetzung ein Aluminiumsilikatmineral enthält, und
einen Schritt des Mischens an Ort und Stelle in der Ausschachtung, der eine erste Phase des Mischens an Ort und Stelle des Bodens vor Ort mit der ersten Zusammensetzung (A) während der Phase des Absenkens, gefolgt von einer zweiten Phase des Mischens an Ort und Stelle der zweiten Zusammensetzung (B) mit dem zuvor mit der ersten Zusammensetzung (A) gemischten Boden vor Ort umfasst, wobei die zweite Phase des Mischens während der Phase des Anhebens stattfindet, wobei durch Reaktion der ersten Zusammensetzung (A) mit der zweiten Zusammensetzung (B) ein Geopolymer (G) an Ort und Stelle gebildet wird.

2. Verfahren nach Anspruch 1, wobei die Alkalibase eine Alkalisilikatlösung enthält.

3. Verfahren zur Herstellung eines Elements (C, P1, P2, P3) in einem Boden (S) zum Verbessern der mechanischen Eigenschaften des Bodens, das einen Schritt umfasst, gemäß dem ein Vorgraben (40) in dem Boden (S) gebildet wird und dieser Vorgraben mit einer ersten Zusammensetzung (g1) gefüllt wird und danach ausgeführt werden:

ein Schritt des Bohrens einer Ausschachtung (E/T) in dem Boden (S), während dem eine zweite Zusammensetzung in die Ausschachtung eingespritzt wird, wobei der Schritt des Bohrens darin besteht, die Ausschachtung in Grabenform im rechten Winkel zu dem Vorgraben, der die erste Zusammensetzung (g1) enthält, zu bohren, um die erste Zusammensetzung in die Ausschachtung zu führen, und
ein Schritt des Mischens, an Ort und Stelle in der Ausschachtung, des Bodens der Ausschachtung vor Ort mit der ersten und der zweiten Zusammensetzung, um an Ort und Stelle ein Geopolymer (G) zu bilden, wobei das Geopolymer an Ort und Stelle durch Reaktion der ersten Zusammensetzung mit der zweiten Zusammensetzung gebildet wird, wobei die erste oder die zweite Zusammensetzung eine Alkalibase enthält, die erste Zusammensetzung ein Aluminiumsilikatmineral enthält, wenn die zweite Zusammensetzung die Alkalibase enthält, und, wenn die erste Zusammensetzung die Alkalibase enthält, die zweite Zusammensetzung ein Aliminiumsilikatmineral enthält.

**Claims**

1. A method of fabricating an element (C, P1, P2, P3) in ground (S) to improve the mechanical properties of said ground, the method comprising:

providing a drilling and mixing tool (20);
a step of drilling an excavation (E/T) in the ground (S) comprising a stage of lowering the drilling and mixing tool followed by a stage of raising the drilling and mixing tool;

said method including:

a step of injecting a first composition (A) during the lowering stage;
a step of injecting a second composition (B) during the raising stage, the first composition or the second composition containing an alkaline base, the first composition (A) containing a silico-aluminous mineral while the second composition contains the alkaline base, and when the first composition (B) contains the alkaline base, the second composition contains a silico-aluminous mineral; and

an in situ mixing step, in the excavation, comprising a first stage of in situ mixing of the ground in place with the first composition (A) during the lowering stage, followed by a second stage of in situ mixing of the second composition (B) with the ground in place as previously mixed with the first composition (A), the second mixing stage taking place during the raising stage, a geopolymer (G) being formed in situ by reaction of the first composition (A) with the second composition (B).

2. The method according to claim 1, wherein the alkaline base contains a solution of alkaline silicate.

3. A method of fabricating an element (C, P1, P2, P3) in ground (S), to improve the mechanical properties of said ground, comprising a step of forming a pretrench (40) in the ground (S) and filling this pretrench with a first composition, there is subsequently performed:

a step of drilling an excavation (E/T) in the ground (S) while injecting a second composition into the excavation, the drilling step consisting in drilling the excavation in the form of a trench in register with the pretrench containing the first composition (g1) in order to entrain the first composition into the excavation; and

a step of mixing, in situ, in the excavation, the ground in place with the first and second compositions in order to form in situ a geopolymer, the geopolymer being formed in situ by the first composition reacting with the second composition, the first composition or the second composition containing an alkaline base, the first composition containing a silico-aluminous mineral while the second composition contains the alkaline base, and when the first composition contains the alkaline base, the second composition contains a silico-aluminous mineral.

FIG.1A

FIG.1B

FIG.1C

FIG.1D

FIG.2A          FIG.2B          FIG.2C

EP 3 194 662 B1

FIG.3A                    FIG.3B                    FIG.3C

EP 3 194 662 B1

FIG.4A

FIG.4B

FIG.4C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5814147 A
- WO 2011020975 A
- WO 2007116178 A
- EP 1878833 A